# EUROPEAN PATENT APPLICATION

(11) **EP 4 426 008 A1**
(43) Date of publication of application: **04.09.2024**
(21) Application number: 21961692.7
(22) Date of filing: 26.10.2021
(51) Int. Cl.: H04W 36/00, H04W 48/10

(54) **TA INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2021/126419
(87) International publication number: WO 2023/070315

(57) **Abstract**

A TA information processing method and apparatus, and a communication device and a storage medium. The TA information processing method executed by a first network device may comprise: receiving a non-access-stratum (NAS) request message, wherein the NAS request message includes first TA information (S 110); when at least one of TAs indicated by the first TA information is included in an RA of a UE, determining not to trigger UE registration update (S 121); or, when none of the TAs indicated by the first TA information is included in the RA of the UE, determining to trigger the UE registration update (S122).

## Description

### FIELD

The present invention relates to, but is not limited to, the technical field of wireless communications, and more particularly to a method and an apparatus for processing tracking area (TA) information, a communication device and a storage medium.

### BACKGROUND

A user equipment (UE) sends a registration request to a network when initially connecting to the network, and a network device responds to the registration request. In a process of registration, the network device creates and stores a registration area (RA) of the UE, and generally the RA includes one or more TAs.

Non-terrestrial networks (NTN) may include NTN cells. Typical NTN cells include, but are not limited to, satellite cells.

The NTN cell broadcasts TA information for a TA, and may broadcast TA information for multiple TAs simultaneously.

In some cases, the network device determines that it is required for the UE to send a registration update to update the RA of the UE. However, after receiving a registration update notification, the UE determines that it does not need to perform the registration update, thereby causing a conflict between the network device and the UE in determining whether the registration update needs to be initiated, and further causing abnormal flow processing.

### SUMMARY

Embodiments of the present invention provide a method and an apparatus for processing tracking area (TA) information, a communication device and a storage medium.

According to a first aspect of embodiments of the present invention, there is provided a method for processing TA information, performed by a first network device, including: receiving a non-access-stratum (NAS) request message, the NAS request message at least including first TA information; determining not to trigger a registration update of a user equipment (UE) in a case where at least one TA of one or more TAs indicated by the first TA information is included in a registration area (RA) of the UE, or determining to trigger the registration update of the UE in a case where none of the one or more TAs indicated by the first TA information is included in the RA of the UE.

According to a second aspect of embodiments of the present invention, there is provided a method for processing TA information, performed by a second network device, including: receiving a NAS request message from a UE; at least adding first TA information in the NAS request message, where the first TA information is TA information broadcast by the second network device; and sending the NAS request message at least added with the first TA information to a first network device.

According to a third aspect of embodiments of the present invention, there is provided an apparatus for processing TA information, performed by a first network device, the method including: a first receiving module configured to receive a NAS request message, the NAS request message at least including the first TA information; and a determining module configured to determine not to trigger a registration update of a UE in a case where at least one TA of one or more TAs indicated by the first TA information is included in the RA of the UE, or determine to trigger the registration update of the UE in a case where none of the one or more TAs indicated by the first TA information is included in the RA of the UE. The first TA information is the TA information broadcast by a second network device. When at least one TA of the one or more TAs indicated by the first TA information is included in the RA of the UE, it is determined not to trigger the registration update of the UE.

According to a fourth aspect of embodiments of the present invention, there is provided a method for processing TA information, performed by a second network device, the apparatus including: a second receiving module configured to receive a NAS request message from a UE; an adding module configured to at least add first TA information in the NAS request message, where the first TA information is the TA information broadcast by the second network device; and a second sending module configured to send the NAS request message at least added with the first TA information to a first network device.

According to a fifth aspect of embodiments of the present invention, there is provided a communication device, including a processor, a transceiver, a memory and an executable program stored on the memory and capable of being executed by the processor, where the processor is configured to execute the executable program to perform the method for processing the TA information of the first aspect or the second aspect.

According to a sixth aspect of embodiments of the present invention, there is provided a computer storage medium having stored therein an executable program that, when executed by a processor, causes the method for processing the TA information of the first aspect or the second aspect to be performed.

With the technical solution provided by embodiments of the present invention, the first network device receives the NAS request message including the first TA information and/or the second TA information from the second network device, that is, the first TA information broadcast to the UE is informed to the first network device by the second network device. In this way, a collision between the UE and the network device in determining whether the registration update is required or not may be avoided, thereby avoiding an abnormal flow caused by different determination results of the network device and the UE.

It is to be understood that both the foregoing general description and the following detailed description are illustrative and explanatory only and shall not be construed to limit the present invention.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a wireless communication system according to an illustrative embodiment.
FIG. 2 is a schematic diagram illustrating a TA handover of a wireless cell according to an illustrative embodiment.
FIG. 3 is a schematic diagram illustrating a TA handover of a wireless cell according to another illustrative embodiment.
FIG. 4 is a flow diagram illustrating a registration update of a TA according to an illustrative embodiment.
FIG. 5 is a schematic diagram illustrating a TA handover of a wireless cell according to a further illustrative embodiment.
FIG. 6A is a flow diagram illustrating a method for processing TA information according to an illustrative embodiment.
FIG. 6B is a flow diagram illustrating a method for processing TA information according to an illustrative embodiment.
FIG. 7A is a flow diagram illustrating a method for processing TA information according to an illustrative embodiment.
FIG. 7B is a flow diagram illustrating a method for processing TA information according to an illustrative embodiment.
FIG. 7C is a flow diagram illustrating a method for processing TA information according to an illustrative embodiment.
FIG. 7D is a flow diagram illustrating a method for processing TA information according to an illustrative embodiment.
FIG. 8 is a flow diagram illustrating a method for processing TA information according to an illustrative embodiment.
FIG. 9 is a flow diagram illustrating a method for processing TA information according to an illustrative embodiment.
FIG. 10 is a flow diagram illustrating a method for processing TA information according to an illustrative embodiment.
FIG. 11 is a schematic diagram illustrating an apparatus for processing TA information according to an illustrative embodiment.
FIG. 12 is a schematic diagram illustrating an apparatus for processing TA information according to an illustrative embodiment.
FIG. 13 is a schematic diagram illustrating a communication device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present invention are only for the purpose of describing specific embodiments, but should not be construed to limit the present invention. As used in the embodiments of the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

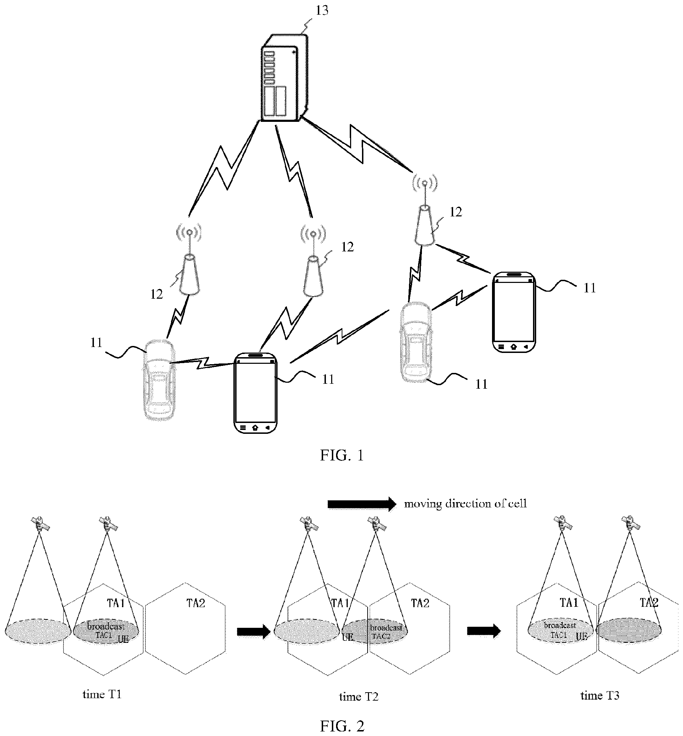

FIG. 1 is a schematic diagram showing a wireless communication system provided by an embodiment of the present invention. As shown in FIG. 1, the wireless communication system is a communication system based on a cellular mobile communication technology, and may include several UEs 11 and several access devices 12.

The UE 11 may be a device that provides voice and/or data connectivity to a user. The UE 11 may communicate with one or more core networks via a radio access network (RAN). The UE 11 may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may be a device of an unmanned aerial vehicle. Alternatively, the UE 11 may be a vehicle-mounted device, for example, a driving computer with a wireless communication function, or a wireless communication device externally connected with a driving computer. Alternatively, the UE 11 may be a roadside device, such as a street lamp, a signal lamp or other roadside devices with a wireless communication function.

The access device 12 may be a device at the network side in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN), or a MTC system.

The access device 12 may be an evolved base station (eNB) used in the 4G system. Alternatively, the access device 12 may be a centralized distributed architecture base station (gNB) used in the 5G system. When the access device 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device 12 is not limited in the embodiments of the present invention.

A wireless connection may be established between the access device 12 and the UE 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may be established between the UEs 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

Several access devices 12 are connected to the network management device 13, respectively. The network management device 13 may be a core network device in the wireless communication system, for example, the network management device 13 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 13 is not limited in the embodiment of the present invention.

The UE accesses network through a terrestrial cellular system. Typically, a radio cell broadcasts a tracking area code (TAC) of a single tracking area (TA) to the UE, which registers with the network using the TA. The network may then page the UE based on the TA during a service. The UE accesses the network through a satellite system, and the satellite cell supports broadcasting the TAC of the single TA or multiple TAs to the UE for better paging the UE due to height, movement, etc. of a satellite.

As shown in FIG. 2, the satellite broadcasts the TAC of the single TA. Taking the UE at a TA1 as an example, at a time T1, the UE receives a TAC1 broadcast by a satellite 1. At a time T2, the satellite 1 moves to intersection of the TA1 and a TA2, and at this moment, in a case where coverage of the TA2 covered by the satellite 1 is greater than a coverage of the TA1 covered by the satellite 1, a TAC2 is broadcast, and the UE receives information about the TAC2 broadcast by the satellite 1. At a time T3, the satellite 1 has completely moved out of a coverage area of the TA1, coverage is provided by a satellite 2 moving into the coverage area, the TAC1 is broadcast to the ground, and the UE receives information about the broadcast TAC1. Therefore, the broadcast TACs received by the UE at the TA1 at different moments are TAC1, TAC2, TAC1, TAC2, ... and so on.

FIG. 2 shows that the satellite cell broadcasts the single TAC.

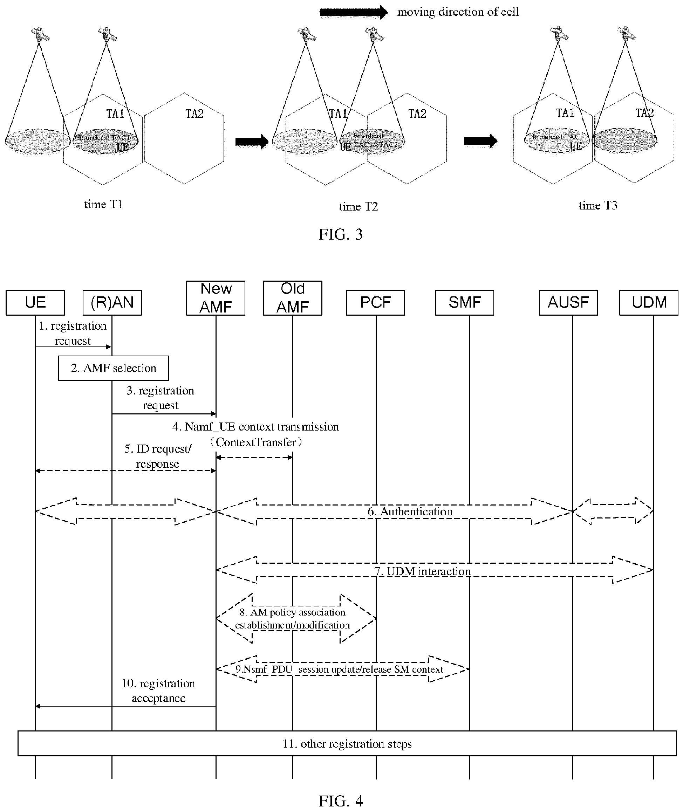

As shown in FIG. 3, the satellite broadcasts multiple TACs. Taking the UE being in the TA1 as an example, at a time T1, the satellite 1 broadcasts the TAC1, and the UE receives the information about the TAC1 broadcast by the satellite 1. At a time T2, the satellite 1 moves to the intersection of the TA1 and the TA2, and at this moment, the satellite 1 broadcasts TAC1 + TAC2, and the UE receives information about TAC1 + TAC2 broadcast by the satellite 1. At a time T3, the satellite 1 has completely moved out of the coverage area of the TA1, the coverage is provided by the satellite 2 moving into the coverage area, the TAC1 is broadcast to the ground, and the UE receives the information about the TAC1 broadcast by the satellite 2. Therefore, the broadcast TACs received by the UE at the TA1 at different moments are TAC1, TAC1 + TAC2, TAC1, TAC1 + TAC2, ... and so on.

FIG. 2 shows that the satellite cell broadcasts the multiple TACs.

The satellite communication system may use any one of the above-described broadcast modes, or may use a combination of the two modes.

FIG. 4 shows a registration update flow of the UE, which may include the following steps.
1) The UE sends a registration request message to an access network (AN) or radio access network (RAN) device. The message includes an access network (AN) parameter, a registration type, a subscription concealed identifier (SUCI) or a 5G temporary UE identity (5G-GUTI) or paging early indication (PEI), requested network slice selection assistance information (NSSAI), tracking area identification (TAI) available for last access, etc.
   The registration type indicates whether a terminal is to perform an initial registration, a mobile registration update, a periodic registration update, or an emergency registration. To assist an access and mobility management function (AMF) in determining a registration area for the UE, the TAI for the last access may be included.
2) The (R)AN selects an AMF and requests network slice selection assistance information (NSSAI) based on the (random) access technology ((R)AT). In a case where the (R)AN may not select an appropriate AMF, the AN/RAN forwards the registration request message to an AMF configured in the (R)AN.
3) The (R)AN sends an N2 message to a new AMF. The message includes an N2 parameter, a registration request, etc. The N2 parameter includes a selected public land mobile network identifier (PLMN ID), location information, and a unit identity associated with a unit in which the UE is located.
4) In a case where the AMF in service has changed since a last registration procedure, the new AMF may retrieve a stored SUPI of the UE and UE context from an old AMF.
5) In a case where the terminal does not provide a SUCI, or the SUCI is retrieved from the old AMF, the new AMF initiates an identity request procedure to the terminal for requesting the SUCI.
6) The new AMF may decide to initiate a UE authentication by calling an authentication server function (AUSF). The AMF selects the AUSF based on the SUPI or SUCI.
7) In a case where the AMF has changed since the last registration procedure, or in a case where the SUPI provided by the UE does not reference a valid context in the AMF, the AMF based on the SUPI selects a unified data management (UDM) and registers with the UDM. In a case where the AMF does not have subscription data for the UE, the AMF retrieves access and mobility subscription data from the UDM.
8) The new AMF performs establishment/modification of AM policy association on a policy control function (PCF).
9) In a case where the registration request in step 1 includes a list of protocol data unit (PDU) sessions to be activated, the AMF sends a Nsmf_PDUSession_UpdateSMContext request to a session management function (SMF) associated with the PDU sessions to activate user plane connections of these PDU sessions.
10) The new AMF sends a registration accept message to the terminal indicating that the registration request has been accepted. Contents of the message include region information about a registration area, information about a movement restriction, an allowed NSSAI, and a strictly periodic registration timer indication. In a case where the AMF allocates a new registration area, area information about the registration area needs to be sent to the terminal. In a case where the registration accept message does not include the region information about the registration area, the terminal will consider the old registration area to be valid. In a case where the terminal and registration type of a mobile restriction application are not an emergency registration, information about the movement restriction is included.
11) Additional steps for the registration update.

In an initial registration process of the UE, the AMF obtains a current TA of the UE, and constructs a registration area (RA) according to the TA and other TAs (e.g. a most recently visited TA, or a neighboring TA). Thereafter, the AMF performs paging the UE according to the RA. In a case where the user moves and the current TA where the UE is located changes, the UE initiates a registration update, and the RA is updated to include a latest current TA of the UE.

In a case where a radio cell accessed by the satellite indicates that it supports broadcasting multiple TACs, the related art defines that, after the UE is registered to the network, in a case where a TA corresponding to at least one TAC of the broadcast TACs is included in the RA, the UE does not need to perform a registration update process; in a case where every TA corresponding to the broadcast TACs is not included in the RA, the UE needs to initiate the registration update to update the RA.

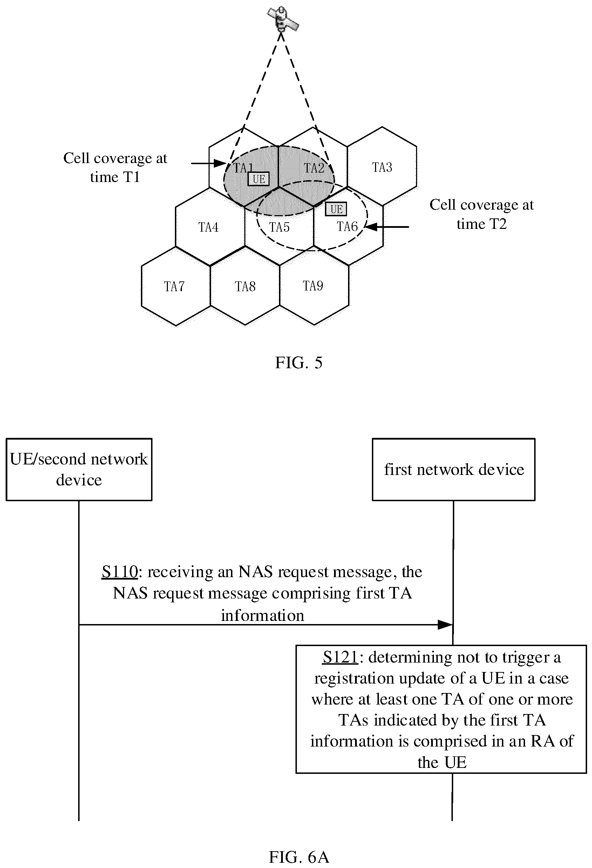

As shown in FIG. 5, the satellite cell covers the TA1, TA2 and TA5 and broadcasts TAC1, TAC2 and TAC5 at a time T1. It is assumed that the UE is located at the TA1 at this moment, a network registration request is initiated, and in the registration request, user location information (ULI) includes the TAC1 and sends the TAC1 to the AMF. The AMF creates the RA for the UE including the TAC1. In order to avoid frequent registration updates caused by movement of the UE, TAC(s) of one or more TAs adjacent to the TA1 may further be added to the RA. After the registration is successful, the RA of the UE includes {TAC1, TAC2, TAC4, TAC5}.

At a time T2, the satellite cell moves to an area of a dotted circle as shown in FIG. 5, where TAC2, TAC5 and TAC6 are broadcast. Meanwhile, the UE has moved from the TA1 to the TA6. At this moment, in a case where the UE initiates a non-access-stratum (NAS) request to the network, the ULI includes the TAC6 and sends the TAC6 to the AMF. In a case where the AMF receives the request information, from a network perspective, since the TAC6 is not included in the UE RA {TAC1, TAC2, TAC4, TAC5}, the AMF needs to trigger the UE to initiate the registration update process to update the RA to include the TAC6. In a case where the UE receives a trigger message of the registration update, since the TAC2 and the TAC5 in the broadcast information TAC2, TAC5 and TAC6 received by the UE are included in the current UE RA, there is no need to initiate the registration update according to the related art. In this way, an abnormal conflict that the network device determines that it needs to trigger the registration update and the UE determines that it does not need to initiate the registration update will occur, which may result in abnormal flow processing.

As shown in FIG. 6A, embodiments of the present invention provide a method for processing TA information, performed by a first network device, including the following steps.

In S 110, a NAS request message is received, the NAS request message at least including first TA information; optionally, the NAS request message further includes second TA information.

In S121, it is determined not to trigger the registration update of the UE in a case where at least one TA of one or more TAs indicated by the first TA information is included in the RA of the UE.

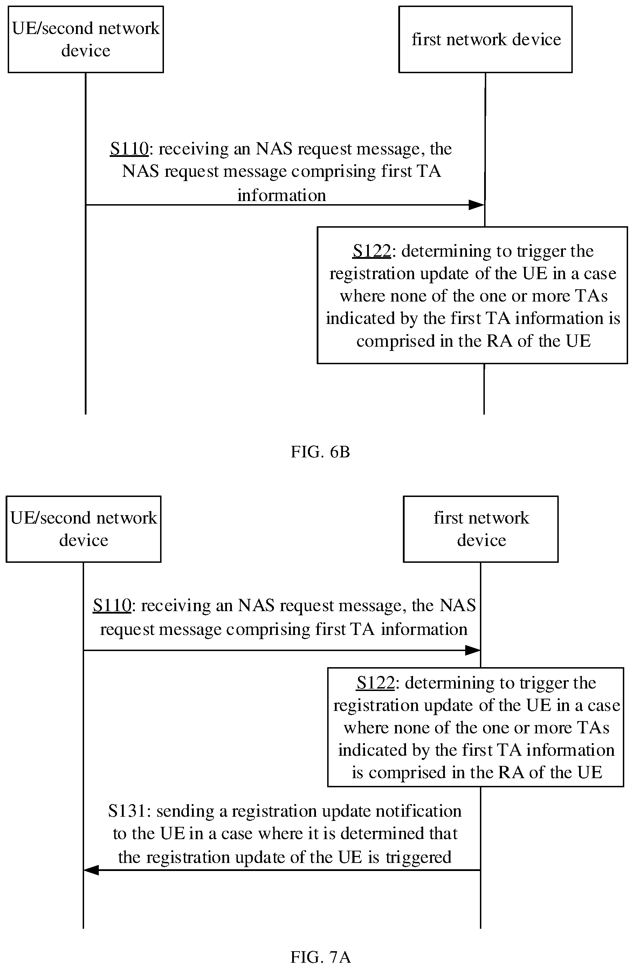

As shown in FIG. 6B, embodiments of the present invention provide a method for processing the TA information, performed by the first network device, including the following steps.

In S 110, the NAS request message is received, the NAS request message at least including the first TA information; optionally, the NAS request message further includes the second TA information.

In S122, it is determined to trigger the registration update of the UE in a case where none of the one or more TAs indicated by the first TA information is included in the RA of the UE.

The first network device herein includes, but is not limited to: an AMF of a core network.

The NAS request message at least carries the first TA information, and the first TA information may indicate one or more TAs. The first TA information may be added to the NAS request message by the second network device. The second network device includes, but is not limited to, a base station.

The NAS request message may further carry the second TA information indicating one or more TAs for indicating a TA in which the UE is currently located, or a TA adjacent to such a TA. The second TA information may be added to the NAS request message by the second network device. The second network device includes, but is not limited to, the base station.

In a case where at least one of the TAs indicated by the first TA information is included in the RA of the UE, the first network device determines that it is not necessary to trigger the UE to initiate the registration update, and only in a case where none of the TAs indicated by the first TA information is included in the RA, the first network device determines that it is necessary to trigger the UE to initiate the registration update. The first TA information broadcast to the UE is informed to the first network device by the second network device. In this way, the collision between the UE and the network device in determining whether the registration update is required or not may be avoided, thereby avoiding an abnormal flow caused by different determination results of the network device and the UE.

In one embodiment, the NAS request message includes at least one of: a service request message; a registration update request message; a protocol data unit (PDU) session establishment request message; or a PDU session modification request message.

The NAS request message is originally from the UE. The first TA information and/or the second TA information carried by the NAS request message may be added by the UE or added by the second network device.

The service request message may be a request sent in a case where the UE requests related services, for example, a video service and/or a voice service, etc.

The registration update request message may be sent when the UE moves to a TA outside the RA.

The PDU session establishment request message is configured for the UE to request the network device to establish a new PDU session.

The PDU session modification request message is configured for the UE to request the network device to modify the currently established PDU session.

The first TA information carried in the NAS request message may be configured for the first network device to determine whether the UE needs to be triggered to initiate the registration update. Here, the registration update is configured to update the RA of the UE, and a process of the registration update may reuse the initial registration process, as shown in FIG. 5 as described above.

In one embodiment, the TA information carried in the NAS request message includes at least one of: the first TA information representing information about all the TAs broadcast by the second network device to the UE; and/or the second TA information indicating the TA in which the UE is currently located or the TA adjacent to the TA in which the UE is currently located.

The second network device herein includes, but is not limited to, the base station configured to send the NAS request message.

In another embodiment, the NAS request message may further include: the second TA information indicating at least one of: the TA in which the UE is currently located, or the TA adjacent to the TA in which the UE is currently located.

The TA adjacent to the TA in which the UE is currently located include, but is not limited to: the TA adj acent to the TA in which the UE is currently located; and/or a TA within a preset range from the TA in which the UE is currently located.

The above is merely a specific example of the TA adj acent to the TA in which the UE is currently located, and the specific implementation is not limited to the above example.

In embodiments, both the first TA information and the second TA information may be added to the NAS request message by the second network device, or may be added to the NAS request message by the UE itself.

In some embodiments, as shown in FIG. 7A, the method further includes the following step.

In S131, a registration update notification is sent to the UE in a case where it is determined that the registration update of the UE is triggered.

The registration update notification is sent to the UE in the case where it is determined that the registration update of the UE is triggered. After the registration update notification is received by the UE, the UE may initiate an update registration flow according to the registration update notification.

It is worth noting that the registration update notification may be sent to the UE separately, or may be sent together with a response message for the NAS request message simultaneously, or may be sent after the NAS request message.

For example, the registration update notification may be sent as an information element (IE) or a container in the NAS request message, or may be sent as a separate NAS message to the UE.

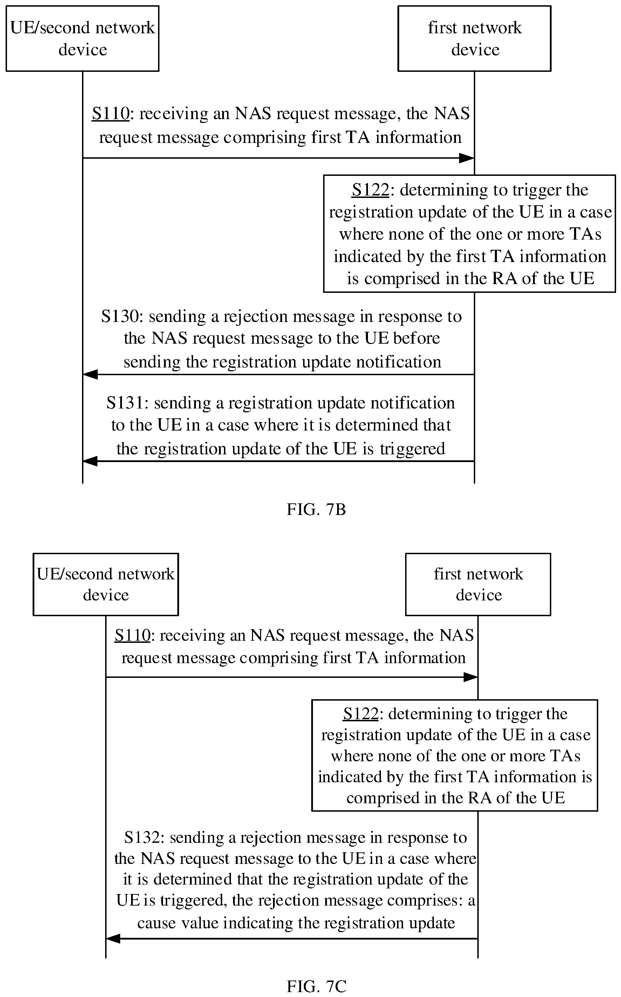

In one embodiment, as shown in FIG. 7B, the method further includes the following step.

In S130, a rejection message in response to the NAS request message is sent to the UE before sending the registration update notification.

In order to trigger the UE to perform the registration update in time, the rejection message in response to the NAS request message is sent to the UE to inform the UE that the NAS request is rejected, so as to initiate the registration update. After completing the registration update, the UE may obtain a service by means of re-sending the NAS request message, and perform the PDU session establishment or the PDU session modification, etc.

The rejection message here may not carry a cause value that the NAS request is rejected, or may carry the cause value that the NAS request is rejected.

In some other embodiments, as shown in FIG. 7C, the method further includes the following step.

In S 132, the rejection message in response to the NAS request message is sent to the UE in a case where it is determined that the registration update of the UE is triggered, where the rejection message includes: a cause value indicating the registration update.

In embodiments of the present invention, the rejection message in response to the NAS request message is sent to the UE in the case where it is determined that the registration update of the UE is triggered, and the rejection message is equivalent to informing the UE not to accept the NAS request, and the UE is required to perform the registration update. After completing the registration update, the UE may obtain the service, establish the PDU session, or modify the PDU session by resending the service request message, the PDU session establishment request message, or the PDU session modification request message.

In embodiments of the present invention, the rejection message may carry the cause value for refusing to respond to the NAS request message, and the cause value may indicate the registration update. In this way, the UE alone may initiate the registration update request according to the cause value, and at this time, the cause value indicating the registration update may be considered to be a trigger for the UE to initiate the registration update. In this way, the UE is triggered to initiate the registration update, and sending the registration update notification separately is not needed.

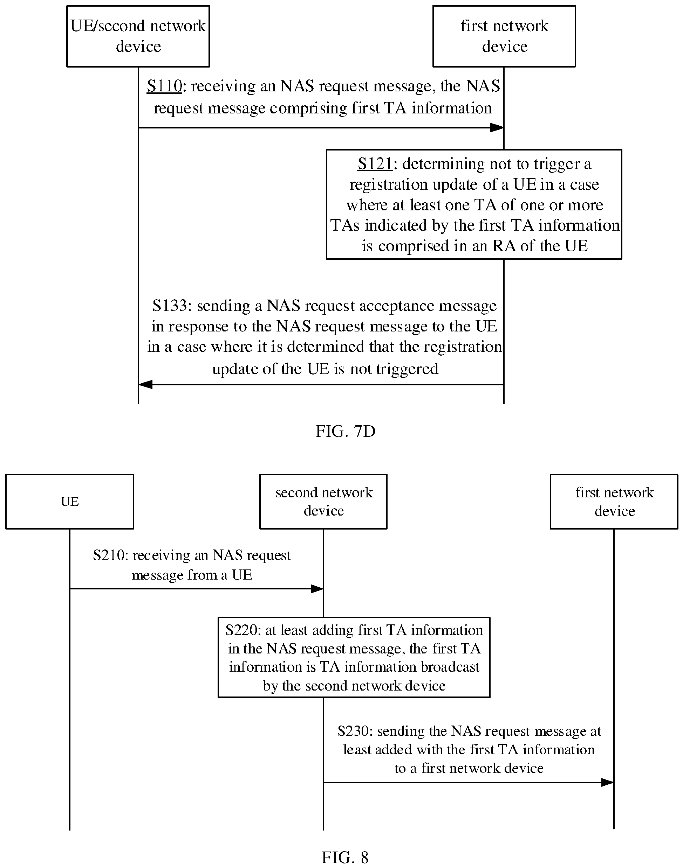

As shown in FIG. 7D, the method further includes the following step.

In S 133, a NAS request acceptance message in response to the NAS request message is sent to the UE in a case where it is determined that the registration update of the UE is not triggered.

In embodiments of the present invention, the NAS request acceptance message in response to the NAS request message is sent to the UE in the case where it is determined that the registration update of the UE is not triggered, thereby responding to the NAS request of the UE and realizing provision of the NAS service.

As shown in FIG. 8, embodiments of the present invention provide a method for processing TA information, performed by a second network device, including the following steps.

In S210, a NAS request message is received from a UE.

In S220, first TA information is at least added in the NAS request message, where the first TA information is TA information broadcast by the second network device.

In S230, the NAS request message at least added with the first TA information is sent to a first network device.

The second network device here may be an access network device. For example, the second network device includes, but is not limited to, eNB or gNB.

In some embodiments, the NAS request message includes at least one of: a service request message; a registration update request message; a PDU session establishment request message; or a PDU session modification request message.

A relevant description of the NAS request message can be referred to any of the foregoing embodiments and thus will not be repeated here.

In some embodiments, the NAS request message further includes: second TA information indicating at least one of: a TA in which the UE is currently located, or a TA adjacent to the TA in which the UE is currently located. The second TA information may be a TA determined by the second network device according to a current location of the UE, and/or a TA adj acent to the TA. After the second network device receives the NAS request message, the second TA information may further be added in the NAS request message. The second TA information is reported to the first network device, and the first network device may store the second TA information. The second TA information may be configured to determine whether the UE is located in a prohibited area or a service-prohibited area and/or configured for the network device to subsequently page the UE.

In a case where the UE sends an initial registration request and/or a NAS request (service request, PDU session establishment/update request) message, a wireless access device (gNB) sends the first TA information and/or the second TA information to the AMF, and the AMF establishes the RA according to the first TA information and/or the second TA information or determines whether the registration update needs to be triggered to update the RA. The first TA information includes TAC information about all the TAs broadcast by the gNB, and the second TA information indicates the TAC of the TA in which the UE is currently located or the TA adjacent to the TA in which the UE is currently located.

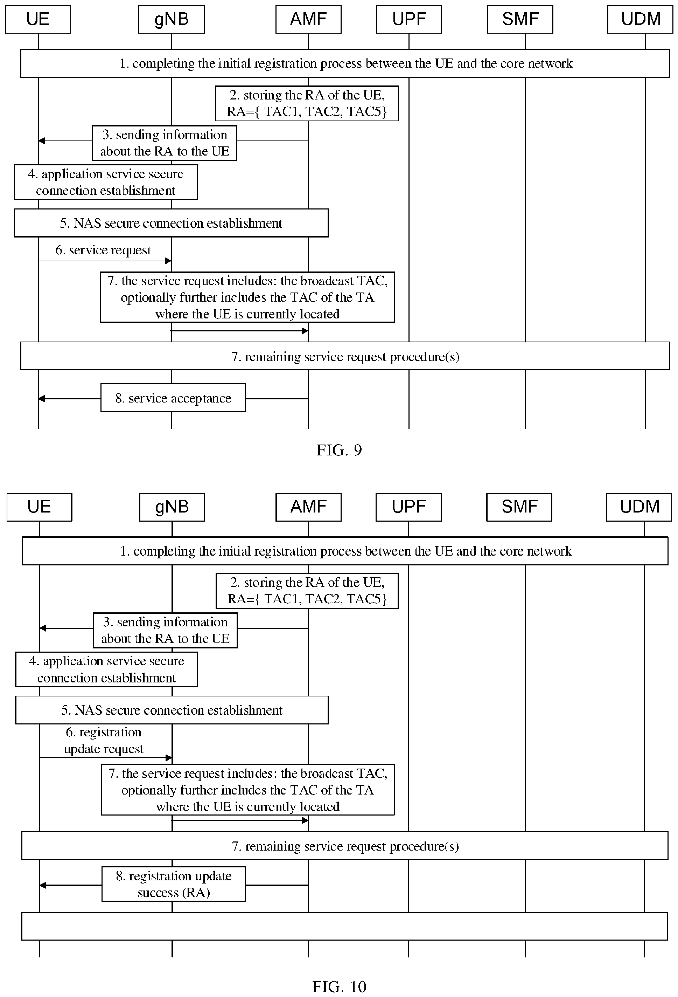

FIG. 3 is referred as an example, assuming that the UE is located at the TA1, the initial registration request is initiated, and the gNB sends the broadcast TAC to the AMF. After the initial registration is successful, the AMF constructs and stores the RA, where the RA includes the TAC1, TAC2 and TAC5, and the AMF returns the RA to the UE for storage. After that, the UE moves to the TA6 and initiates the service request, and the satellite cell also moves, and broadcasts the TAC2, TAC5 and TAC6 to the UE. When the UE initiates the service request, processes of the UE and the AMF are shown in FIG. 9.
1. At a time T1, the UE is located at the TA1, and completes an initial access registration process between the UE and the core network through a satellite access network.
2. The RA of the UE is stored, and the AMF determines that the RA of the UE includes the TAC1, TAC2 and TAC5 when processing the registration request of the UE.
3. Information about the RA is sent to the UE, for example, the AMF puts the information about the RA in a registration acceptance message and returns it to the UE. The UE stores the information about the RA.
4. After the update registration is successful, the UE establishes an access-stratum (AS) secure connection with the access device.
5. A NAS secure connection between the UE and the core network device is established.
6. The UE initiates the service request message at a time T2.
7. After receiving the service request from the UE, the gNB sends the broadcast TACs including the TAC2, TAC5 and TAC6 to the AMF. Optionally, the gNB may further send the TAC6 corresponding to the current TA of the UE.
   After receiving the above message, the AMF determines that the received TACs {TAC2, TAC5, TAC6} have the TAC2 and the TAC5 included in the RA, and there is no need to trigger the registration update. In a case where the gNB further provides the TAC6 corresponding to the current TA of the UE, the AMF determines that although the current TA of the UE is not included in the RA, there are other broadcast TAs included in the RA, and the AMF does not trigger the registration update for now. The AMF stores the TAC6 as the current location of the UE to initiate paging according to the TAC6 during subsequent paging. The AMF performs other steps for the service request.
8. The AMF returns a service accept message to the UE.

In embodiments of the present invention, all the broadcast TACs are provided to the AMF by the gNB in a case where the UE sends the NAS request message.

The AMF determines that as long as any broadcast TAC is included in the RA, there is no need to trigger the registration update, otherwise, the registration update is triggered, and thus the problem of the abnormal conflict proposed in the present invention can be solved.

However, since the AMF may not obtain the TA where the UE is currently located according to the broadcast TAC, this may affect a UE paging efficiency, and wastes paging resources.

While reporting the broadcast TAC, the gNB may further report the TAC corresponding to the current TA of the UE to the AMF, and the AMF stores information about the current TA of the UE, thereby improving the paging efficiency and saving the paging resources.

Also taking FIG. 3 as an example, assuming that the UE is located at the TA1, the initial registration request is initiated, and the gNB sends the broadcast TACs to the AMF. After the initial registration is successful, the AMF constructs and stores the RA, where the RA includes the TAC1, TAC2 and TAC5, and the AMF returns the RA to the UE for storage. After that, the UE moves to the TA4 and initiates the PDU session establishment, and the satellite cell also moves, and broadcasts the TAC4, TAC7 and TAC8 to the UE. At this time, the UE determines that none of the broadcast TACs is included in the RA, and thus before the UE initiates the PDU session establishment, the registration update process is initiated, as shown in FIG. 10.
1. At a time T1, the UE is located at the TA1, and completes the initial access registration process between the UE and the core network through the satellite access network.
2. The RA of the UE is stored, and the AMF determines that the RA of the UE includes the TAC1, TAC2 and TAC5 when processing the registration request of the UE.
3. The information about the RA is sent to the UE, for example, the AMF puts the information about the RA in the registration acceptance message and returns it to the UE. The UE stores the information about the RA.
4. After the update registration is successful, the UE establishes the AS secure connection with the access device.
5. The NAS secure connection between the UE and the core network device is established.
6. In case of initiating a PDU session establishment request, the UE determines that none of the TACs currently broadcast is included in the RA, and the registration update needs to be initiated first. The UE initiates the registration update request.
7. After receiving the registration update request from the UE, the gNB sends the broadcast TACs including the TAC4, TAC7 and TAC8 to the AMF. Optionally, the gNB may further send the TAC4 corresponding to the current TA of the UE.
   After receiving the above message, the AMF determines that none of the received TACs {TAC4, TAC7 and TAC8} is included in the RA, and RA update is performed, to make the updated RA include the TAC4, TAC7 and TAC8.
8. The AMF returns a registration update success message to the UE, and sends the updated RA to the UE for storage.
9. After receiving a response message that the registration update is successful, the UE initiates a process of establishing the PDU session.

In embodiments of the present invention, upon initiating the PDU session establishment request message, the UE determines that none of the broadcast TACs is included in the RA, and the registration update needs to be initiated. After updating the RA, the UE initiates the process of establishing the PDU session.

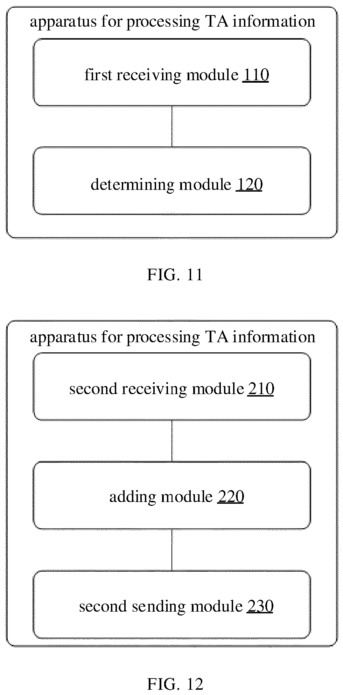

As shown in FIG. 11, embodiments of the present invention provide an apparatus for processing TA information, including: a first receiving module 110 configured to receive a NAS request message, the NAS request message at least including first TA information; and a determining module 120 configured to determine not to trigger a registration update of a UE in a case where at least one TA of one or more TAs indicated by the first TA information is included in a RA of the UE, or determine to trigger the registration update of the UE in a case where none of the one or more TAs indicated by the first TA information is included in the RA of the UE. The first TA information is the TA information broadcast by a second network device.

The apparatus for processing the TA information may be included in the first network device.

In one embodiment, the first receiving module 110 and the determining module 120 may be program modules. The program modules, when executed by a processor, are capable of performing functions of the various modules described above.

In another embodiment, the first receiving module 110 and the determining module 120 may be a combination of hard and soft modules. The combination of hard and soft modules includes, but is not limited to, various programmable arrays. The programmable arrays include, but are not limited to, field programmable arrays and/or complex programmable arrays.

In yet another embodiment, the first receiving module 110 and the determining module 120 may be pure hardware modules. The pure hardware modules include, but are not limited to, application-specific integrated circuits.

In one embodiment, the NAS request message includes at least one of: a service request message; a registration update request message; a protocol data unit (PDU) session establishment request message; or a PDU session modification request message.

In one embodiment, the NAS request message further includes: second TA information indicating at least one of a TA in which the UE is currently located, or a TA adjacent to the TA in which the UE is currently located.

In one embodiment, the apparatus further includes a registration update notification module configured to send a registration update notification to the UE in a case where it is determined that the registration update of the UE is triggered.

In one embodiment, the first sending module is further configured to send a rejection message in response to the NAS request message to the UE before sending the registration update notification.

In one embodiment, the apparatus further includes a rejection module configured to send a rejection message in response to the NAS request message to the UE in the case where it is determined that the registration update of the UE is triggered, where the rejection message includes: a cause value indicating the registration update.

In one embodiment, the apparatus further includes an acceptance module configured to send a NAS request acceptance message in response to the NAS request message to the UE in the case where it is determined that the registration update of the UE is not triggered.

As shown in FIG. 12, embodiments of the present invention provide an apparatus for processing TA information, including: a second receiving module 210 configured to receive a NAS request message from a UE; an adding module 220 configured to at least add first TA information in the NAS request message, where the first TA information is TA information broadcast by a second network device; and a second sending module 230 configured to send the NAS request message at least added with the first TA information to the first network device.

The apparatus for processing the TA information may be included in the second network device.

In one embodiment, the second receiving module 210, the adding module 220 and the second sending module 230 may be program modules. The program modules, when executed by the processor, are capable of performing the functions of the various modules described above.

In another embodiment, the second receiving module 210, the adding module 220 and the second sending module 230 may be a combination of hard and soft modules. The combination of hard and soft modules includes, but is not limited to, various programmable arrays. The programmable arrays include, but are not limited to, the field programmable arrays and/or complex programmable arrays.

In yet another embodiment, the second receiving module 210, the adding module 220 and the second sending module 230 may be pure hardware modules. The pure hardware modules include, but are not limited to, the application-specific integrated circuits.

In one embodiment, the NAS request message includes at least one of: a service request message; a registration update request message; a PDU session establishment request message; or a PDU session modification request message.

In one embodiment, the NAS request message further includes second TA information indicating a TA in which the UE is currently located, or a TA adj acent to the TA in which the UE is currently located.

Embodiments of the present invention provide a communication device, including: a memory for storing processor-executable instructions; and a processor connected to the memory. The processor is configured to execute the method for processing the TA information provided in any of the foregoing technical solutions.

The processor may include various types of storage media that are non-transitory computer storage media capable of still storing information after the communication device is powered down.

Here, the communication device includes the access device or the core network device.

The processor may be coupled to the memory via a bus or the like for reading an executable program stored on the memory, to perform e.g. at least one of the methods shown in FIGS. 6A, 6B, 7A to 7D, and 8 to 10.

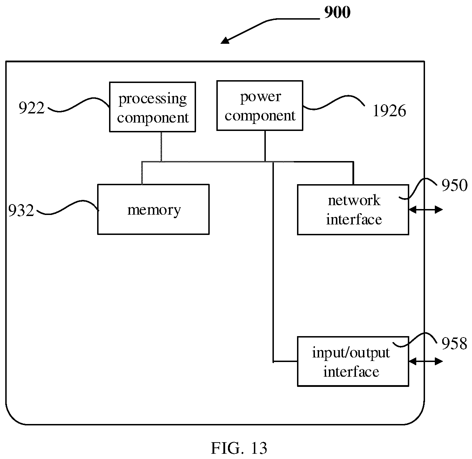

As shown in FIG. 13, embodiments of the present invention show a structure of the communication device. For example, a communication device 900 may be provided as a network-side device. The communication device may be the access device and/or the core network device as previously described.

Referring to FIG. 13, the communication device 900 includes a processing component 922 including one or more processors and a memory resource represented by a memory 932. The memory 932 is configured to store instructions executable by the processing component 922, such as an application program. The application program stored in the memory 932 may include one or more modules each corresponding to a set of instructions. In addition, the processing component 922 is configured to execute instructions to implement any of the above-described methods applied to the access device, e.g. the methods illustrated in FIGS. 6A, 6B, 7A to 7D, and 8 to 9.

The communication device 900 may also include a power component 926 configured to perform power management of the communication device 900, a wired or wireless network interface 950 configured to connect the communication device 900 to a network, and an input/output (I/O) interface 958. The communication device 900 may operate an operating system stored in the memory 932, such as Windows ServerTM, Mac OS XTM, UnixTM, LinuxTM, FreeBSDTM or similar operating systems.

Embodiments of the present invention provide a computer storage medium having stored therein the executable program that, when executed by the processor, causes the method for processing the TA information provided in any of the foregoing technical solutions, for example, the methods shown in FIGS. 6A, 6B, 7A to 7D, and 8 to 9 to be performed.

The computer storage medium includes, but is not limited to, various non-transitory storage media. The non-transitory storage medium includes, but is not limited to, a hard disk, a flash disk or a USB disk, etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present invention as come within known or customary practice in the art. It is intended that the specification and examples be considered as illustrative only, with a true scope and spirit of the disclosure being indicated by the following claims.

It will be appreciated that the present invention is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing tracking area, TA, information, performed by a first network device, comprising:
receiving a non-access-stratum, NAS, request message, the NAS request message at least comprising first TA information;
determining not to trigger a registration update of a user equipment, UE, in a case where at least one TA of one or more TAs indicated by the first TA information is comprised in a registration area, RA, of the UE, or
determining to trigger the registration update of the UE in a case where none of the one or more TAs indicated by the first TA information is comprised in the RA of the UE;
wherein the first TA information is TA information broadcast by a second network device.

2. The method of claim 1, wherein the NAS request message comprises at least one of:
a service request message;
a registration update request message;
a protocol data unit, PDU, session establishment request message; or
a PDU session modification request message.

3. The method of claim 1, wherein the NAS request message further comprises second TA information indicating at least one of:
a TA in which the UE is currently located, or a TA adjacent to the TA in which the UE is currently located.

4. The method of any one of claims 1 to 3, further comprising:
sending a registration update notification to the UE in a case where it is determined that the registration update of the UE is triggered.

5. The method of claim 4, further comprising:
sending a rejection message in response to the NAS request message to the UE before sending the registration update notification.

6. The method of any one of claims 1 to 3, further comprising:
sending a rejection message in response to the NAS request message to the UE in a case where it is determined that the registration update of the UE is triggered, wherein the rejection message comprises: a cause value indicating the registration update.

7. The method of any one of claims 1 to 6, further comprising:
sending a NAS request acceptance message in response to the NAS request message to the UE in a case where it is determined that the registration update of the UE is not triggered.

8. A method for processing TA information, performed by a second network device, comprising:
receiving a NAS request message from a UE;
at least adding first TA information in the NAS request message, wherein the first TA information is TA information broadcast by the second network device; and
sending the NAS request message at least added with the first TA information to a first network device.

9. The method of claim 8, wherein the NAS request message comprises at least one of:
a service request message;
a registration update request message;
a PDU session establishment request message; or
a PDU session modification request message.

10. The method of claim 8 or 9, wherein the NAS request message further comprises second TA information indicating at least one of:
a TA in which the UE is currently located, or a TA adjacent to the TA in which the UE is currently located.

11. An apparatus for processing TA information, comprising:
a first receiving module configured to receive a NAS request message, the NAS request message at least comprising first TA information; and
a determining module configured to determine not to trigger a registration update of a UE in a case where at least one TA of one or more TAs indicated by the first TA information is comprised in a RA of the UE, or determine to trigger the registration update of the UE in a case where none of the one or more TAs indicated by the first TA information is comprised in the RA of the UE;
wherein the first TA information is TA information broadcast by a second network device.

12. The apparatus of claim 11, wherein the NAS request message comprises at least one of:
a service request message;
a registration update request message;
a PDU session establishment request message; or
a PDU session modification request message.

13. The apparatus of claim 10, wherein the TA information further comprises:
the second TA information indicating a TA in which the UE is currently located, or a TA adjacent to the TA in which the UE is currently located.

14. The apparatus of any one of claims 11 to 13, further comprising:
a registration update notification module configured to send a registration update notification to the UE in a case where it is determined that the registration update of the UE is triggered.

15. The apparatus of claim 14, wherein the first sending module is further configured to send a rejection message in response to the NAS request message to the UE before sending the registration update notification.

16. The apparatus of any one of claims 11 to 14, further comprising:
a rejection module configured to send a rejection message in response to the NAS request message to the UE in a case where it is determined that the registration update of the UE is triggered, wherein the rejection message comprises: a cause value indicating the registration update.

17. The apparatus of any one of claims 11 to 16, further comprising:
an acceptance module configured to send a NAS request acceptance message in response to the NAS request message to the UE in a case where it is determined that the registration update of the UE is not triggered.

18. A method for processing TA information, the apparatus comprising:
a second receiving module configured to receive a NAS request message from a UE;
an adding module configured to at least add first TA information in the NAS request message, wherein the first TA information is TA information broadcast by a second network device; and
a second sending module configured to send the NAS request message at least added with the first TA information to a first network device.

19. The apparatus of claim 18, wherein the NAS request message comprises at least one of:
a service request message;
a registration update request message;
a PDU session establishment request message; or
a PDU session modification request message.

20. The apparatus of claim 18 or 19, wherein the NAS request message further comprises:
the second TA information indicating a TA in which the UE is currently located, or a TA adjacent to the TA in which the UE is currently located.

21. A communication device, comprising a processor, a transceiver, a memory and an executable program stored on the memory and capable of being executed by the processor, wherein the processor is configured to execute the executable program to perform the method of any one of claims 1 to 7 or 8 to 10.

22. A computer storage medium having stored therein an executable program that, when executed by a processor, causes the method of any one of claims 1 to 7 or 8 to 10 to be performed.
